Europäisches Patentamt

**European Patent Office**

Office européen des brevets

(11) Numéro de publication: **0 231 673**
**B1**

(12) FASCICULE DE BREVET EUROPEEN

(45) Date de publication du fascicule du brevet:
**25.10.89**

(21) Numéro de dépôt: **86402568.9**

(22) Date de dépôt: **20.11.86**

(51) Int. Cl.⁴: **F16J 15/32**, F16J 9/06,
F02C 7/232, F02C 9/26

(54) Dispositif composite d'étanchéité.

(30) Priorité: **25.11.85 FR 8517745**

(43) Date de publication de la demande:
**12.08.87 Bulletin 87/33**

(45) Mention de la délivrance du brevet:
**25.10.89 Bulletin 89/43**

(84) Etats contractants désignés:
**DE FR GB**

(56) Documents cités:
**DE-B- 1 101 070**
**FR-A- 589 386**
**FR-A- 1 435 225**
**GB-A- 1 012 879**
**US-A- 1 479 089**
**US-A- 1 827 903**
**US-A- 3 057 630**
**US-A- 3 218 087**

(73) Titulaire: **SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)**

(72) Inventeur: **d'Agostino, Guy, 1, rue Molière,
F-94400 Vitry(FR)**
Inventeur: **Dhainaut, André, 117 F avenue du Colonel
Fabien, F-77190 Dammarie les Lys(FR)**
Inventeur: **Kettler, Daniel Germain Alexi, 3, le Moulin à
vent, F-77770 Chartrettes(FR)**
Inventeur: **Leclerc, Henry, Roger, 12, rue Victor Hugo,
F-91260 Juvisy Sur Orge(FR)**

(74) Mandataire: **Moinat, François, S.N.E.C.M.A. Service des
Brevets Boite Postale 81, F-91003 Evry Cédex(FR)**

ACTORUM AG

## Description

La présente invention concerne les dispositifs d'étanchéité disposés entre un arbre coulissant et le fourreau dans lequel il coulisse, afin de séparer de façon étanche deux chambres, par exemple des chambres annulaires du fourreau alimentées en fluide à des pressions différentes.

L'invention concerne plus précisément un dispositif composite d'étanchéité disposé entre un arbre et un fourreau, l'arbre coulissant sous une faible pression de commande dans le fourreau et délimitant avec le fourreau deux zones remplies de fluides à des pressions différentes, le dispositif d'étanchéité étant disposé dans une gorge réalisée dans l'un des deux éléments constitués par le fourreau et l'arbre et comprenant au plus deux organes, dont l'un est un organe de serrage coopérant avec le fond de gorge et la face radiale de la gorge située du côté haute pression tandis que l'autre organe est un organe d'étanchéité apte à être plaqué par l'organe de serrage contre la surface cylindrique de l'élément ne comportant pas la gorge et contre la face radiale de la gorge située du côté basse pression du dispositif.

Les dispositifs d'étanchéité courants ont souvent l'inconvénient de réaliser l'étanchéité entre l'arbre et le fourreau par frottement radial de l'élément d'étanchéité contre l'une des deux pièces et si ce type d'étanchéité est tolérable pour un arbre en rotation dans son fourreau, il l'est beaucoup moins pour un arbre coulissant.

Dans ce deuxième cas, il est intéressant de pouvoir réaliser l'étanchéité par pression de l'élément d'étanchéité contre une face radiale de la gorge qui contient cet élément.

Ainsi, le brevet FR 1 113 528 prévoit un joint d'étanchéité torique disposé dans une gorge d'un arbre et poussé contre le fourreau entourant l'arbre par un second joint torique de serrage, les deux joints étant séparés par une grille métallique autorisant le passage de fluide dans la gorge afin que la haute pression du fluide contribue à plaquer le joint d'étanchéité contre la paroi du fourreau.

Un tel dispositif présente plusieurs inconvénients. D'une part, le joint d'étanchéité étant torique, risque de rouler sur lui-même lors des déplacements de translation de l'arbre et en raison des pressions importantes dans la gorge, risque de se détériorer d'autant plus rapidement que la grille métallique interposée entre les deux joints viendra s'imprimer en relief dans le joint, lors des rotations de celui-ci sur lui-même. Cet inconvénient peut être tolérable pour des segments de moteurs de pistons tels que montrés également dans le brevet US 1479089, ne peut être admis dans le cas d'une étanchéité sur un arbre coulissant sous une faible pression de commande. En outre, ces dispositifs présentent pour inconvénient de réaliser sur la surface cylindrique du fourreau un frottement proportionnel à la pression de la chambre haute pression.

Ces dispositifs sont difficilement utilisables pour des arbres de faible diamètre, notamment pour des arbres coulissants et surtout si la pression de commande du déplacement en translation de l'arbre doit être faible par rapport aux pressions dans les chambres que sépare le dispositif d'étanchéité et encore moins lorsque la pression dans une des chambres est très fortement supérieure à la pression règnant dans l'autre chambre.

Le brevet FR 1 509 034 prévoit un dispositif ne comportant pas de joint torique mais deux segments, l'un d'étanchéité, l'autre de coincement dans une gorge de l'arbre, les segments comportant des surfaces tronconiques inversées coopérant entre elles et avec un ressort interne qui plaque le segment de coincement contre le segment d'étanchéité, l'effet de coin ainsi réalisé assurant une pression radiale du segment d'étanchéité sur le cylindre entourant l'arbre, et une pression axiale contre la paroi latérale de la gorge.

Un tel dispositif est déjà préférable au précédent car il présente une composante axiale de la force de frottement assurant l'étanchéité, mais il a pour inconvénient de nécessiter, comme le précédent, un troisième élément en plus du segment d'étanchéité et du segment de coincement afin d'assurer une pression de l'élément de coincement sur l'élément d'étanchéité. Ce dispositif en trois parties est donc difficilement utilisable pour des arbres de faible diamètre.

Le document US-A 3 218 087 montre un joint en deux éléments dont l'on assure le serrage de l'autre sur l'arbre.

Ce dispositif présente l'inconvénient d'avoir un joint dont le contact avec la gorge s'effectue sur la totalité de la surface de celle-ci, ce qui par réaction crée un frottement sur l'arbre trop important.

L'invention a donc pour but de réaliser un dispositif d'étanchéité pour un arbre coulissant en translation dans un fourreau sous une pression de commande très faible et très inférieure à la haute pression existant dans l'une au moins des chambres annulaires entourant l'arbre.

Dans cette optique, l'invention doit permettre de réaliser une étanchéité correcte avec un faible débit de fuite inférieur à 10 litres par heure pour une haute pression de l'ordre de 80 bars, alors que la pression de commande de la translation de l'arbre est de l'ordre de 2,5 bars.

Pour ce faire, le dispositif selon l'invention doit assurer un frottement sur l'arbre qui ne dépasse pas une force de 1 à 5 daN pour une pression de 80 bars. Enfin, l'invention se propose de limiter le nombre des pièces du dispositif d'étanchéité à deux, afin d'en rendre l'utilisation et la fabrication possibles pour des diamètres d'arbre n'excédant pas 30 millimètres, et pour une profondeur et une largeur de gorge ne dépassant pas respectivement 5,5 et 6 mm.

On parvient à ces buts en réalisant le dispositif composite d'étanchéité selon l'invention de telle sorte que l'organe annulaire d'étanchéité comporte une première face d'étanchéité et d'appui coopérant avec la face radiale de la gorge située du côté basse pression, une seconde face d'étanchéité et d'appui contre la surface cylindrique de l'élément, arbre ou fourreau, qui ne comporte pas de gorge et au moins une troisième face située sensiblement perpendiculairement à la bissectrice de l'angle fomé par les premières et deuxième faces, la troisième face coopérant avec l'organe de serrage pour que ledit organe de serrage exerce sur l'organe d'étchanéité une force sensiblement dirigée dans la direction de ladite bissectrice. En outre, l'organe d'étanchéité comporte au moins une ouverture permettant au fluide à haute pression de se répartir dans la gorge également de chaque côté de l'organe de serrage.

Selon une charactéristique de l'invention, la face d'étanchéité et d'appui de l'organe d'étanchéité sur la surface cylindrique de l'élément ne portant pas la gorge, comprend au moins un dégagement annulaire formant une chambre entre ladite face et ladite surface cylindrique et cette chambre est reliée à la haute pression pour diminuer le frottement radial entre arbre et fourreau.

Dans un mode de réalisation, la face radiale de la gorge du côté haute pression est orthogonale à l'axe de l'arbre tandis que la face radiale de la gorge du côté basse pression est inclinée vers la basse pression d'un angle β compris entre 15° et 30° par rapport à la normale à l'axe de l'arbre.

Selon une première variante d'exécution, l'organe d'étanchéité est constitué par un segment annulaire à basse de polytétrafluoréthylène de section droite trapézoïdale dont la grande base constitue la génératrice de la face d'appui, l'un des côtés formant la première face d'étanchéité et le deuxième côté formant la troisième face coopérant avec l'organe de serrage et il comporte au moins un dégagement annulaire sur sa deuxième face et au moins une empreinte creuse sur sa troisième face pour le passage du fluide dans la gorge.

Selon d'autres variantes d'exécution, l'organe d'étanchéité est un segment annulaire dont la section droite possède une symétrie par rapport à la bissectrice de l'angle formé par les première et deuxième faces, et il est constitué par une nervure annulaire portant les première et deuxième faces et une lèvre formant la troisième face, la nervure et la lèvre comportant des canaux permettant au fluide de haute pression de se répartir dans la gorge de chaque côté de l'organe de serrage.

D'autres caractéristiques de l'invention seront explicitées en regard des planches annexées parmi lesquelles :

- la figure 1 montre un exemple d'utilisation des joints selon l'invention à un doseur de carburant de régulation de turbomachine ;
- la figure 2 montre en section droite le dispositif selon l'invention dans un premier mode de réalisation et les figures 2a et 2b en montrent des variantes d'exécution ;
- la figure 3 montre le même mode de réalisation où l'organe d'étanchéité est fendu en baïonnette, en perspective partielle ;
- la figure 4 montre en section droite une variante de réalisation appliquée à une gorge à parois radiales parallèles ;
- la figure 5 montre, vu du côté haute pression l'organe d'étanchéité de la figure 4 ;
- la figure 6 est une vue partielle de dessus de la figure 5, au niveau de la fente en baïonnette ;
- les figure 7 à 11 montrent d'autres variantes d'exécution correspondant au mode de réalisation dans lequel l'organe d'étanchéité est symétrique par rapport à la bissectrice de l'angle formé par la face d'appui et la face d'étanchéité ;
- la figure 12 prévoit le cas particulier où la haute pression change de côté par rapport au dispositif d'étanchéité.

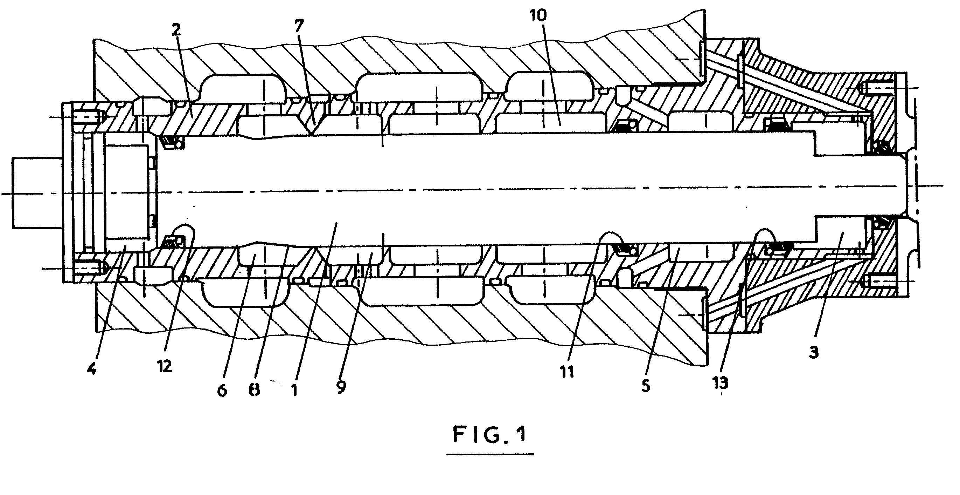

En se reportant à la figure 1, on a représenté un doseur de carburant de turbomachine dans lequel le tiroir 1 du doseur est amené à se déplacer en translation dans un fourreau 2, sous l'action différentielle de fluides de commande à des pressions variant de 2,5 à 15 bars dans deux chambres d'extrémité 3 et 4 de sorte que la pression de commande réelle de la translation du tiroir est de l'ordre de 2,5 bars.

Le doseur est alimenté par une pompe en fluide à haute pression, celle-ci variant dans la chambre annulaire 5 entre 15 et 55 bars.

Le débit de carburant fourni par le doseur est obtenu en sortie d'une chambre 6 à la pression $P_2$ variant de 2,5 à 55 bars par la coopération d'un étranglement 7 du fourreau et d'une surface tronconique 8 du tiroir, le fluide étant dosé par cet étranglement depuis une chambre 9 à la pression $P_1$ variant dans la même plage, en fonction des pressions de commande des chambres 3 et 4.

La chambre annulaire 10 quant à elle, est à une faible pression de l'ordre de 2,5 bars.

On voit donc que les différences de pression entre les chambres 5 et 10 ou 6 et 4 ou encore 5 et 3 peuvent avoisiner 50 bars, les joints d'étanchéité respectivement 11, 12, 13 placés entre le fourreau et le tiroir pour séparer de façon étanche les différentes chambres précitées devant permettre une étanchéité correcte, c'est-à-dire tolérer un débit de fuite qui ne soit pas supérieur à 10 litres par heure tout en n'exerçant pas un effort radial important sur le tiroir afin de ne pas gêner la translation de celui-ci sous sa faible pression de commande.

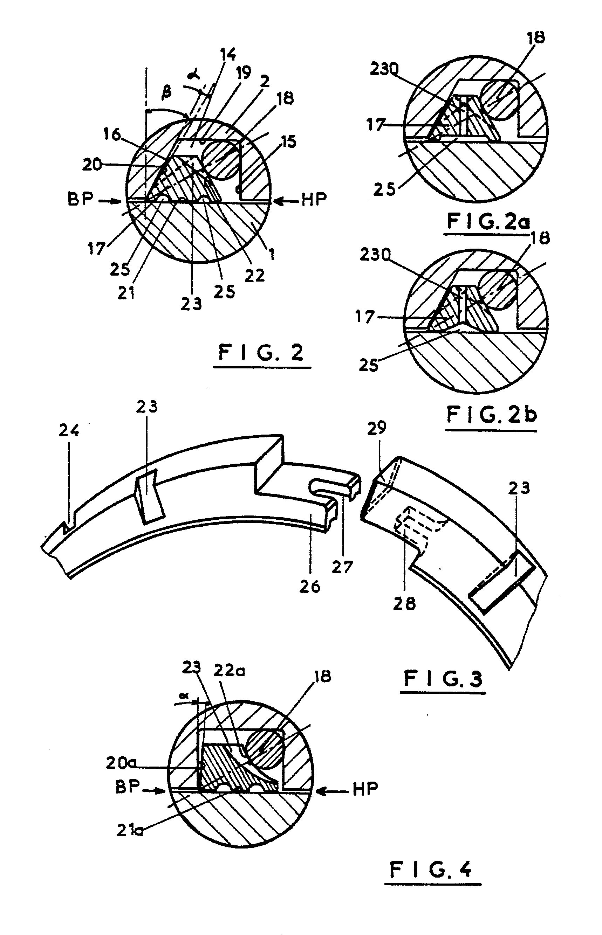

Les figures 2 et 3 montrent un premier mode de réalisation de l'invention. Dans une gorge annulaire 14 du fourreau 2, comportant une face radiale 15 orthogonale à l'axe du tiroir du côté haute pression et une face 16 inclinée d'un angle β compris entre 15 et 30° par rapport à la normale à l'axe du tiroir du côté basse pression, est monté un dispositif composite en deux parties comprenant un organe d'étanchéité formé par un segment annulaire 17 en à base de polytétrafluoréthylène (PTFE) également connu sous le nom commercial de "Téflon" et un organe de serrage annulaire constitué par un joint torique 18 comprimé entre le segment d'étanchéité d'une part et la face 15 et le fond 19 de la gorge d'autre part.

Le segment d'étanchéité a dans sa section droite une forme trapézoïdale, une première face 20 coopérant avec la face 16 inclinée de la gorge pour assurer l'étanchéité du côté basse pression de la gorge, tandis que la grande base du trapèze constituant la génératrice de la deuxième face 21 forme la surface circulaire de contact avec le tiroir 1 et que la troisième face 22 coopère avec le joint torique 18 pour assurer le coincement du segment contre la face 16 de la gorge. Afin de diminuer l'effort radial exercé par le segment 17 sur le tiroir, on réalise le segment 17 de telle sorte que la face 22 soit sensiblement perpendiculaire à la bissectrice de l'angle formé par les faces 20 et 21 afin que l'effort exercé par le joint torique sur le segment comporte une composante axiale plus importante que sa composante radiale. Afin de ne pas perturber cet équilibre de forces choisi, par le fluide à haute pression qui s'introduit dans la gorge, le segment d'étanchéité comporte des ouvertures 23 et 24 sous forme de découpes pratiquées dans les faces 20 et 22 afin de laisser des passages entre le segment d'étanchéité et le joint torique 18 pour que le fluide haute pression se répartisse dans la gorge et exerce des efforts symétriques, de résultante nulle, sur le joint torique.

En outre, si on veut privilégier la composante axiale de l'effort exercé par le joint torique sur le segment 17, il suffira de réaliser celui-ci de telle sorte que la face 22 ne soit plus exactement perpendiculaire à la bissectrice de l'angle formé par les faces 20 et 21. De plus, on peut concentrer l'effort axial d'étanchéité sur l'angle des faces 20 et 21 en réalisant une légère dépouille α de 1 à 3° par rapport à la conicité de la face 16 de la gorge.

Afin de diminuer l'effort radial du segment sur le tiroir, le segment 17 comporte sur sa face 21 de contact au moins un dégagement annulaire 25 formant une chambre annulaire entre le tiroir et le segment, chambre dans laquelle s'infiltre le film de fluide sous pression, ce qui permet d'éviter les risques de collage du segment sur le tiroir et réalise en combinaison avec l'inclinaison de la face 16 de la gorge un effet de coin supplémentaire augmentant le contact d'étanchéité du segment sur la gorge.

Dans les variantes d'exécution des figures 2a et 2b, la chambre annulaire 25 a été élargie et reliée par des canaux 230 à la partie supérieure du segment de façon à ce que le fluide haute pression remplisse plus aisément la chambre 25 afin de diminuer encore l'effort radial sur le tiroir.

Dans le mode de réalisation ici représenté, le segment est un segment fendu dont les deux extrémités se recouvrent en forme de baïonnette radiale dont la partie amincie interne 26 comporte und découpe centrale 27 coopérant avec un ergot 28 disposé sous la partie amincie externe 29 de l'autre extrémité du joint, réalisant ainsi, dans la partie interne de la baïonnette radiale, une double baïonnette axiale.

Un tel segment a pour avantage d'être parfaitement symétrique et d'éviter une opération de détrompage lors de son montage. En outre, par l'élasticité que lui donne sa coupe en baïonnette, il peut être réalisé en un matériau quelque peu rigide tel que le PTFE tout en gardant un appui convenable de toute sa circonférence sur la pièce voisine, à la seule condition d'avoir convenablement déterminé la longueur développée du joint coupé pour qu'il y ait un très léger écartement entre les deux extrémités quand il est en place.

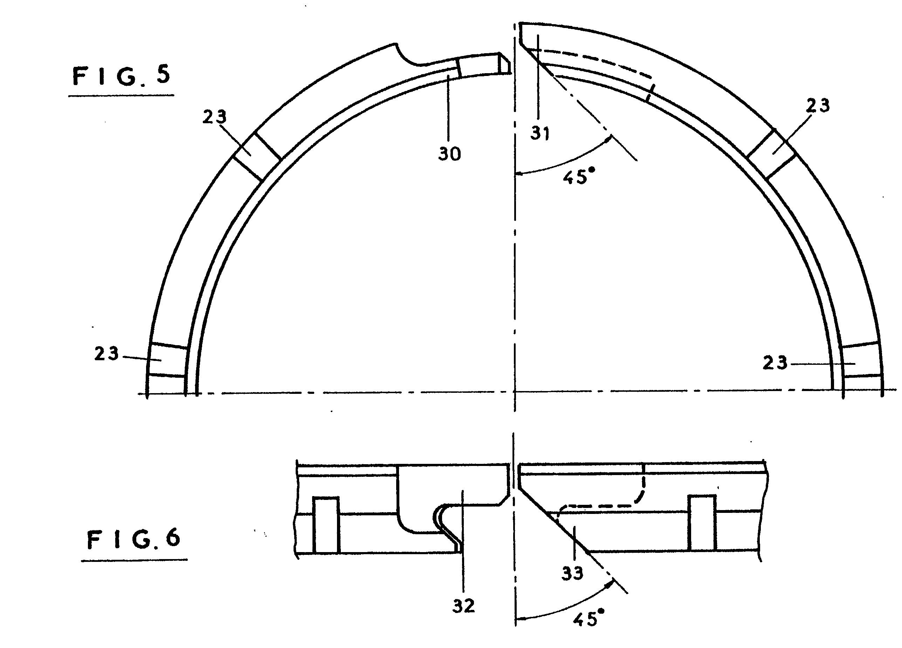

Aux figures 4 à 6 est représentée une variante du segment d'étanchéité applicable à une gorge dont les deux faces radiales sont orthogonales à l'axe du tiroir. Dans cette variante, le segment d'étanchéité n'est plus symétrique et la face 22a coopérant avec le joint torique de coincement présente une concavité coopérant avec le joint torique 18 de telle sorte que la résultante des forces dûes au joint passe par la bissectrice de l'angle formé par les faces 20a et 21a, ce qui permet, de même que dans la variante précédente, de réaliser l'étanchéité sur la face 20a du segment. Un tel segment pourrait également être conformé avec une face 20a conique pour s'adapter à une gorge demiconique telle que celle représentée à la figure 2.

De même que précédemment, des ouvertures 23 usinées dans la face concave 22a du segment permettent l'équilibre de la haute pression de part et d'autre du joint torique 18 de coincement.

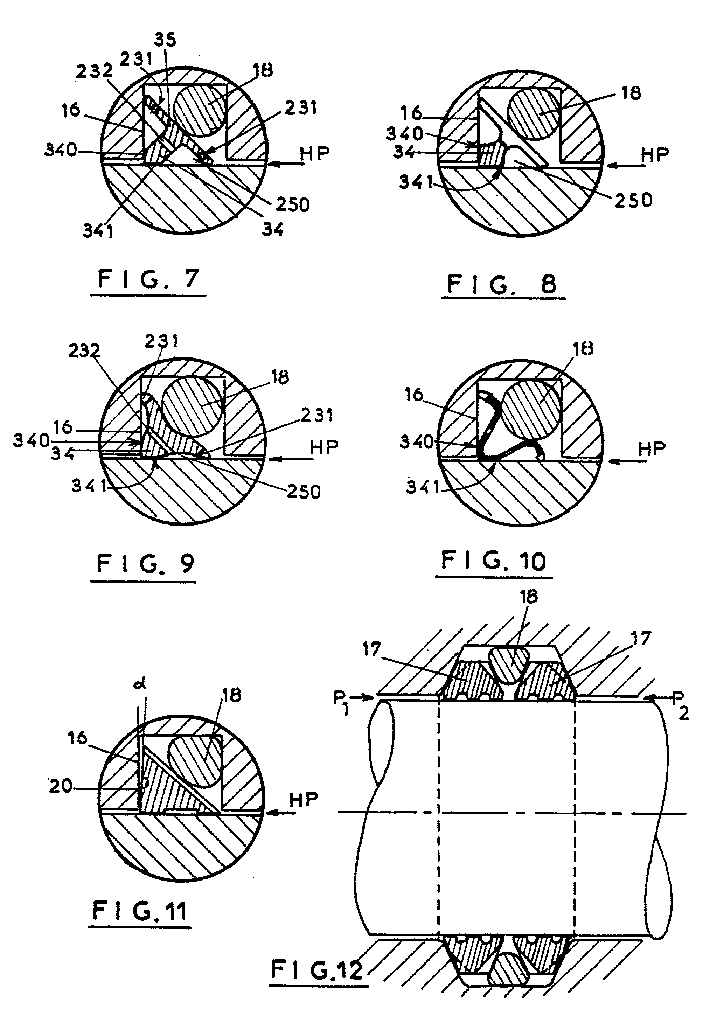

Les figure 5 et 6 montrent que le segment de cette variante est également fendu avec un raccordement à deux baïonnettes simples, l'une radiale 30, 31 et l'autre axiale 32, 33.

Les figures 7 à 9 montrent des modes de réalisation du segment dans lesquels une nervure annulaire 34 porte la première face d'étanchéité 340 coopérant avec la face radiale 16 de la gorge du côté basse pression et la second face d'appui 341 tandis qu'une lèvre 35 sensiblement orthogonale (en section droite) à la nervure constitue la troisième face qui coopère avec le joint torique 18.

Des canaux 231 et 232 permettent au fluide de se répartir autour des faces du segment d'étanchéité et dans la chambre 250 annulaire afin de limiter le contact d'étanchéité à la seule surface 340 et la surface d'appui sur le tiroir à la seule surface 341.

La figure 10 prévoit de réaliser le segment d'étanchéité en une seule lèvre ondulée en forme de "V" à branches courbées, la base du "V" formant d'une part l'étanchéité avec la face aval 16 de la gorge et d'autre part l'appui sur le tiroir, et les branches du "V" assurant le contact de coincement avec le joint torique 18.

La figure 11, quant à elle, propose un segment d'étanchéité à section triangulaire dont la face d'étanchéité 20b comporte une dépouille α par rapport à la face aval 16 de la gorge.

Les segments représenté aux figures 7 à 11 permettent de diminuer encore l'effort radial du dispositif d'étanchéité sur le tiroir.

La figure 12 prévoit le cas où la haute pression est alternativement appliquée d'un côté puis de l'autre du dispositif composite d'étanchéité.

L'étanchéité est alors réalisée par deux segments 17 à section trapézoïdale identiques à ceux des figures 2 ou 2a ou 2b disposés dans une gorge comportant deux parois coniques et séparés par un joint torique de coincement 18 coopérant avec les deux faces en regard des segments 17.

Dans ce cas, l'étanchéité est assurée alternativement par un segment puis l'autre, du côté basse pression.

Les divers types de dispositifs composites d'étanchéité selon l'invention permettent de contenir de fortes pressions avec des diamètres de segments ne dépassant pas 30 millimètres.

Il est bien évident que l'invention couvre également les dispositifs comprenant un organe d'étanchéité non fendu, s'il est réalisé en un matériau souple ou si la gorge qui le reçoit est réalisée en deux parties assemblées après montage du dispositif d'étanchéité.

L'invention s'applique particulièrement bien aux régulations de carburant pour turbomachines.

**Revendications**

1. Dispositif composite d'étanchéité disposé entre un arbre (1) et un fourreau (2), l'arbre (1) coulissant sous une faible pression de commande dans le fourreau (2) et délimitant avec le fourreau (2) deux zones remplies de fluides à des pressions différentes, le dispositif d'étanchéité étant disposé dans une gorge (14) réalisée dans l'un des deux éléments constitués par le fourreau (2) et l'arbre (1) et comprenant au plus deux organes (17, 18) dont l'un est un organe annulaire de serrage (18) coopérant avec le fond (19) de gorge et la face radiale (15) de la gorge située du côté haute pression tandis que l'autre organe est un organe d'étanchéité (17) apte à être plaqué par l'organe de serrage (18) contre la surface cylindrique de l'élément ne comportant pas la gorge et contre la face radiale (16) de la gorge située du côté basse pression, ledit organe d'étanchéité (17) comportant en section droite une première face (20, 20a, 340) d'étanchéité coopérant avec la face radiale (16) de la gorge située du côté basse pression, une seconde face (21) d'appui contre la surface cylindrique de l'élément (1 ou 2) ne comportant pas la gorge, et au moins une troisième face (22, 22a, 35) caractérisé en ce que ladite troisième face (22, 22a, 35) est située sensiblement perpendiculairement à la bissectrice de l'angle formé par les première et deuxième faces et coopère avec l'organe de serrage (18) pour que ledit organe de serrage exerce sur l'organe d'étanchéité (17) une force sensiblement dirigée dans la direction de ladite bissectrice et en ce que l'organe d'étanchéité comporte au moins une ouverture (23, 231, 232) permettant au fluide à haute pression de se répartir dans la gorge également de chaque côté de l'organe de serrage.

2. Dispositif composite d'étanchéité selon la revendication 1, caractérisé en ce que la face d'appui (21) de l'organe d'étanchéité sur la surface cylindrique de l'élément ne portant pas la gorge, comprend au moins un dégagement annulaire (25, 250) formant une chambre entre ladite face et ladite surface cylindrique, ladite chambre étant reliée à la haute pression pour diminuer le frottement radial entre arbre et fourreau.

3. Dispositif composite d'étanchéité selon la revendication 1 ou 2, caractérisé en ce que la première face (20) d'étanchéité de l'organe d'étanchéité est inclinée d'un angle de dépouille α compris entre 1 et 3 degrés par rapport à la face radiale (16) de la gorge du côté basse pression.

4. Dispositif composite d'étanchéité selon l'une quelconque des revendications 1 à 3, caractérisé en ce que la face radiale (15) de la gorge du côté haute pression est orthogonale à l'axe de l'arbre et en ce que la face radiale (16) de la gorge du côté basse pression est inclinée d'un angle β compris entre 15° et 30° par rapport à la normale à l'axe de l'arbre.

5. Dispositif composite d'étanchéité selon l'une quelconque des revendications 1 à 4, caractérisé en ce que l'organe de serrage est constitué par un joint torique (18) comprimé entre le fond de la gorge et la troisième face de l'organe d'étanchéité.

6. Dispositif composite d'étanchéité selon l'une quelconque, des revendications 2 à 5, caractérisé en ce que l'organe d'étanchéité (17) est constitué par un segment annulaire de section droite trapézoïdale dont la grande base constitue la génératrice de la face d'appui (21), l'un des côtés formant la première face d'étanchéité (20) et le deuxième côté formant la troisième face (22) coopérant avec l'organe de serrage (18), en ce qu'il comporte au moins un dégagement annulaire (25) sur sa deuxième face (21) et au moins une empreinte creuse (23) sur sa troisième face (22) pour le passage du fluide.

7. Dispositif composite d'étanchéité selon la revendication 6, caractérisé en ce que la troisième face (22a) du segment annulaire est de forme concave.

8. Dispositif composite d'étanchéité selon l'une des revendications 6 ou 7, caractérisé en ce que le segment d'étanchéité (17) est un segment fendu à raccordement en forme de baïonnette axiale.

9. Dispositif composite d'étanchéité selon l'une quelconque des revendications 6 à 8, caractérisé en ce que le segment d'étanchéité (17) est un segment fendu à raccordement en forme de baïonnette radiale.

10. Dispositif composite d'étanchéité selon l'une quelconque des revendications 1 à 5, caractérisé en ce que l'organe d'étanchéité (17) est un segment annulaire dont la section droite possède une symétrie par rapport à la bissectrice de l'angle formé par les première et deuxième faces, en ce qu'il est constitué par une nervure annulaire (34) portant les première et deuxième faces (340 et 341) et une lèvre (35) formant la troisième face, la nervure et la lèvre comportant des canaux (231, 232) permettant au fluide de haute pression de se répartir dans la gorge de chaque côté de l'organe de serrage.

**Patentansprüche**

1. Zwischen einer Welle (1) und einer Hülse (2) angeordnete zusammengesetzte Dichtungsvorrichtung, wobei die Welle (1) unter einem schwachen Steuerdruck in der Hülse (2) gleitet und zusammen mit dieser zwei Zonen begrenzt, die mit unter verschiedenen Drücken stehenden Flüssigkeiten gefüllt sind, wobei die Dichtungsvorrichtung in einer in einem der beiden von der Hülse (2) und der Welle (1) gebildeten Elemente angebrachten Kehle (14) angeordnet ist und höchstens aus zwei Organen (17, 18) besteht, von denen eines ein ringförmiges Klemmorgan (18) ist, das mit dem Boden (19) und der auf der Hockdruckseite liegenden Radialfläche (15) der Kehle zusammenwirkt, während das andere Organ ein Dichtungsorgan (17) ist, das von dem Klemmorgan (18) gegen die zylindrische Fläche desjenigen der beiden Elemente, das die Kehle nicht enthält, und gegen die auf der Niederdruckseite liegende Fläche der Kehle gedrückt wird, und wobei das Dichtungsorgan (17) in seinem Querschnitt eine erste Dichtungsfläche (20, 20a, 340) besitzt, die mit der auf der Niederdruckseite liegenden radialen Fläche (16) der Kehle zusammenwirkt, ferner eine zweite Fläche (1), die sich gegen die zylindrische Fläche des die Kehle nicht enthaltenden Element (1 oder 2) abstützt, sowie wenigstens eine dritte Fläche (22, 22a, 35), dadurch gekennzeichnet,

daß diese dritte Fläche (22, 22a, 35) annähernd senkrecht zur Winkelhalbierenden des zwischen der ersten und der zweiten Fläche gebildeten Winkels verläuft und mit dem Klemmorgan (18) so zusammenwirkt, daß dieses auf das Dichtungsorgan (17) eine Kraft ausübt, die annähernd in Richtung der genannten Winkelhalbierenden weist,

und daß das Dichtungsorgan wenigstens eine Öffnung (23, 231, 232) besitzt, durch die die Flüssigkeit mit hohem Druck sich gleichmäßig auf jeder Seite des Klemmorgans (18) in der Kehle verteilen kann.

2. Zusammengesetzte Dichtungsvorrichtun nach Anspruch 1, dadurch gekennzeichnet, daß die Fläche (21), mit der das Dichtungsorgan sich auf der zylindrischen Fläche des die Kehle nicht enthaltenden Elements abstützt, wenigstens eine ringförmige Vertiefung (25, 250) besitzt, die zwischen dieser Fläche und der zylindrischen Fläche eine Kammer bildet, die mit dem hohen Druck in Verbindung steht, um die radiale Reibung zwischen Welle und Hülse zu verringern.

3. Zusammengesetzte Dichtungsvorrichtun nach Anspruch 1 oder 2, dadurch gekennzeichnet, daß die erste Dichtungsfläche (20) des Dichtungsorgans gegenüber der auf der Niederdruckseite liegenden radialen Fläche (16) der Kehle um einen zwischen 1° und 3° liegenden Freiwinkel α geneigt ist.

4. Zusammengesetzte Dichtungsvorrichtun nach einem der Ansprüche 1 bis 3, dadurch gekennzeichnet, daß die auf der Hochdruckseite liegende radiale Fläche (15) der Kehle senkrecht zur Achse der Welle verläuft und daß die auf der Niederdruckseite liegende radiale Fläche (16) der Kehle gegenüber der Senkrechten zur Achse der Welle um einen zwischen 15° und 30° liegenden Winkel β geneigt ist.

5. Zusammengesetzte Dichtungsvorrichtun nach einem der Ansprüche 1 bis 4, dadurch gekennzeichnet, daß das Klemmorgan aus einer Ringdichtung (18) besteht, die zwischen dem Boden der Kehle und der dritten Seite des Dichtungsorgans komprimiert ist.

6. Zusammengesetzte Dichtungsvorrichtun nach einem der Ansprüche 2 bis 5, dadurch gekennzeichnet, daß das Dichtungsorgan (17) aus einem Ringelement mit trapezförmigem Querschnitt besteht, dessen große Basis die Erzeugende der Stützfläche (21) darstellt, während eine der Seiten die erste Dichtungsfläche (20) bildet und die zweite Seite die mit dem Klemmorgan (18) zusammenwirkende dritte Fläche (22) bildet, und daß das Dichtungsorgan (17) auf der zweiten Fläche (21) wenigstens einen ringförmigen Absatz (25) und auf seiner dritten Fläche (22) wenigstens eine hohle Vertiefung (23) für den Flüssigkeitsdurchtritt besitzt.

7. Zusammengesetzte Dichtungsvorrichtun nach Anspruch 6, dadurch gekennzeichnet, daß die dritte Fläche (22a) des ringförmigen Segments konkav ist.

8. Zusammengesetzte Dichtungsvorrichtun nach einem der Ansprüche 6 oder 7, dadurch gekennzeichnet, daß das Dichtungssegment (17) ein geschlitztes Element zur Herstellung einer axialen Bajonettverbindung ist.

9. Zusammengesetzte Dichtungsvorrichtun nach einem der Ansprüche 1 bis 8, dadurch gekennzeichnet, daß das Dichtungssegment (17) ein geschlitztes Element zur Herstellung einer radialen Bajonettverbindung ist.

10. Zusammengesetzte Dichtungsvorrichtun nach einem der Ansprüche 1 bis 5, dadurch gekennzeichnet, daß das Dichtungsorgan (17) ein ringförmiges Segment ist, dessen Querschnitt zur Winkelhalbierenden des Winkels zwischen der ersten und der zweiten Seite symmetrisch ist und das (17) aus einer die erste und die zweite Seite (340, 341) tragenden ringförmigen Rippe (34) und einer die dritte Seite bildenden Lippe (35) besteht, wobei die Rippe und die Lippe mit Kanälen (231, 232) ausgestattet sind, die es ermöglichen, daß die Hochdruckflüssigkeit sich auf jeder Seite des Klemmorgans in der Kehle verteilen kann.

**Claims**

1. Composite sealing device disposed between a shaft (1) and a sleeve (2), the shaft (1) sliding under a small control pressure in the sleeve (2) and bounding, with the sleeve (2), two zones filled with fluids at different pressures, the sealing device being disposed in a groove (14) provided in one of the two members formed by the sleeve (2) and the shaft (1) and comprising at least two members (17, 18), one of which is an annular clamping member (18) cooperating with the base (19) of the groove and the radial surface (15) of the groove located on the high pressure side, while the other member is a sealing member (17) designed to be positioned by the clamping member (18) against the cylindrical surface of the member which does not comprise the groove and against the radial surface (16) of the groove located on the low pressure side, the sealing member (17) comprising, in cross-section, a first sealing surface (20, 20a, 340) cooperating with the radial surface (16) of the groove disposed on the low pressure side, a second surface (21) bearing against the cylindrical surface of the member (1 or 2) which does not comprise the groove and at least a third surface (22, 22a, 35), characterized in that this third surface (22, 22a, 35) is disposed substantially perpendicular to the bisector of the angle fomed by the first and second surfaces and cooperates with the clamping member (18) so that this clamping member exerts a force directed substantially in the direction of the bisector on the sealing member (17) and in that the sealing member comprises at least one opening (23, 231, 232) allowing the high pressure fluid to be distributed in the groove in an equal manner on each side of the clamping member.

2. Composite sealing device as claimed in claim 1, characterized in that the surface (21) of the sealing member bearing on the cylindrical surface of the member which does not bear the groove, comprises at least one annular recess (25, 250) forming a chamber between this surface and the cylindrical surface, the chamber being connected to high pressure to reduce the radial friction between the shaft and the sleeve.

3. Composite sealing device as claimed in claim 1 or 2, characterized in that the first sealing surface (20) of the sealing member is inclined by a relief angle $\alpha$ of between 1 and 3 degrees with respect to the radial surface (16) of the groove of the low pressure side.

4. Composite sealing device as claimed in any one of claims 1 to 3, characterized in that the radial surface (15) of the groove of the high pressure side is perpendicular to the axis of the shaft and in that the radial surface (16) of the groove of the low pressure side is inclined by an angle $\beta$ of between 15° and 30° with respect to the perpendicular to the axis of the shaft.

5. Composite sealing device as claimed in any one of claims 1 to 4, characterized in that the clamping member is formed by an O-ring joint (18) compressed between the base of the groove and the third surface of the sealing member.

6. Composite sealing device as claimed in any one of claims 2 to 5, characterized in that the sealing member (17) is formed by an annular segment with a trapezoidal cross-section, whose larger surface forms the generatrix of the bearing surface (21), one of the sides forming the first sealing surface (20) and the second side forming the third surface (22) cooperating with the clamping member (18) and in that it comprises at least one annular recess (25) on its second surface (21) and at least one hollow cavity (23) on its third surface (22) for the passage of the fluid.

7. Composite sealing device as claimed in claim 6, characterized in that the third surface (22a) of the annular segment has a concave shape.

8. Composite sealing device as claimed in one of claims 6 or 7, characterized in that the sealing segment (17) is a split segment with a coupling in the form of an axial bayonet.

9. Composite sealing device as claimed in any one of claims 6 to 8, characterized in that the sealing segment (17) is a split segment with a coupling in the form of a radial bayonet.

10. Composite sealing device as claimed in any one of claims 1 to 5, characterized in that the sealing member (17) is an annular segment whose cross-section is symmetrical with respect to the bisector of the angle formed by the first and second surfaces, in that it is formed by an annular rib (34) bearing the first and second surfaces (340 and 341) and a lip (35) forming the third surface, the rib and the lip comprising ducts (231, 232) enabling the high pressure fluid to be distributed in the groove on each side of the clamping member.

FIG. 1

EP 0 231 673 B1

F I G. 2

F I G. 2a

F I G. 2b

F I G. 3

F I G. 4

FIG. 5

FIG. 6

23

30

31

45°

23

33

45°

32

FIG. 7

FIG. 8

FIG. 9

FIG. 10

FIG.11

FIG.12